# EUROPEAN PATENT APPLICATION

(11) **EP 3 435 250 A1**
(43) Date of publication of application: **30.01.2019**
(21) Application number: 17183606.7
(22) Date of filing: 27.07.2017
(51) Int. Cl.: G06F 17/30, G06T 3/00, G06T 15/04, G06T 19/20

(54) **METHOD, APPARATUS AND COMPUTER PROGRAM FOR OVERLAYING A WEB PAGE ON A 3D OBJECT**

(71) Applicant: Vestel Elektronik Sanayi ve Ticaret A.S., 45030 Manisa (TR)
(72) Inventor: KÍRÍSKEN, Barbaros, 45030 Manisa (TR)
(74) Representative: Flint, Adam

(57) **Abstract**

A Web page (10) is overlaid on a real or virtual 3D object (24, 26) for viewing by a viewer (22). The Web page (10) has plural content regions (12, 14, 16). To achieve the overlaying, the content regions (12, 14, 16) are allocated to different respective portions (24A, 24B; 26) of the 3D object (24, 26). The allocation of the content regions (12, 14, 16) is hierarchical, such that a content region of the Web page (10) that has a highest importance is allocated to a portion of the 3D object (24, 26) that is at least one of (i) nearest to the viewer (22) in the field of view of the viewer (22) and (ii) centremost in the field of view of the viewer (22). The content regions (12, 14, 16) are resized as necessary to fit the content region (12, 14, 16) within the portion of the 3D object (24, 26) allocated to that content region (12,14, 16).

## Description

### Technical Field

The present disclosure relates to a method, apparatus and a computer program for overlaying a Web page on a real or virtual 3D object.

### Background

Numerous arrangements and techniques for presenting a Web page on a display are known, a Web page being a "document" that is suitable for the World Wide Web and Web browsers. Often, a browser running on a user computing device, such as a personal computer, tablet computer, smart phone, etc., displays Web pages in the form provided.

So-called "responsive Web design" is an approach to Web design which adjusts the layout of the Web page as displayed according to the size and/or aspect ratio of the screen or Web browser which is being used to view the Web page. This enables the layout of the display of the Web page to be adjusted according to whether for example the Web page is being viewed on a large monitor or display screen, a tablet computer or a smart phone.

US6898307B1 discloses an object identification method and system for an augmented-reality display. A real item, preferably a page of paper, is disposed as a reference frame for an electronic image to be displayed. The orientation of the page is identified by the system. Corresponding real world coordinates are computed for the captured image and compared with predetermined standards to verify the nature of the object. This enables viewing and interacting with a real world item such as a page, with a virtual display of imagery and/or text overlaid on an image of the page to give the illusion of holding a printed version of an electronic document without actually printing the displayed document.

### Summary

According to a first aspect disclosed herein, there is provided a computer-implemented method for overlaying a Web page on a real or virtual 3D object for viewing by a viewer, the Web page having plural content regions, the method comprising:
allocating the content regions of the Web page to different respective portions of the 3D object;
wherein the allocating of the content regions of the Web page is hierarchical, such that a content region of the Web page that has a highest importance is allocated to a portion of the 3D object that is at least one of (i) nearest to the viewer in the field of view of the viewer and (ii) centremost in the field of view of the viewer;
resizing at least one of the content regions of the Web page as necessary to fit the content region within the portion of the 3D object allocated to that content region; and,
overlaying the content regions of the Web page on the respective allocated portions of the 3D object.

The 3D object may be a real or a virtual object. For example, the Web page may be overlaid on a real 3D object by for example projecting an image of the Web page on the real 3D object, which can be viewed directly by viewers (without requiring a head-mounted display or goggles or the like). As another example, the 3D object may be a real object that is being viewed through a viewing apparatus such as a head-mounted display or goggles or the like; in that case the Web page is overlaid on an image of the real 3D object which is being viewed through some viewing apparatus. In yet another example, the 3D object may be a virtual object which is computer-generated and being viewed through a viewing apparatus such as a head-mounted display or goggles or the like; in that case the Web page is overlaid on the computer-generated image of the 3D object which is being viewed through some viewing apparatus.

In an example, the resizing of the at least one of the content regions of the Web page is carried out using a grid having a plurality of rows and a plurality of columns, wherein a grid is notionally applied to the portion of the 3D object allocated to that content region and the spacing of the rows and columns of the grid are adjusted as necessary so that the grid fits that content region.

This is analogous to, though different in detail from, so-called fluid grids which are used in 2D responsive Web design.

In an example, the method comprises, prior to overlaying a content region on an allocated portion of the 3D object, reshaping the content region as necessary according to the three dimensional shape of the allocated portion of the 3D object.

The three dimensional shape of the allocated portion of the 3D object could be planar, like for example the side of a cube or a cuboid, etc. In such a case, no reshaping is necessary to account for the three dimensional shape of the allocated portion. Otherwise, if the three dimensional shape of the allocated portion of the 3D object is not planar, then some reshaping is typically carried out.

In an example, the method comprises, prior to overlaying a content region on an allocated portion of the 3D object, reshaping the content region as necessary according to the perspective of the allocated portion of the 3D object as viewed by the user.

For example, the allocated portion of the 3D object may appear to taper off into the distance as viewed by the viewer. In such a case, the content region may be reshaped so as to follow or match that tapering of the allocated portion of the 3D object.

In an example, the 3D object is an image of a real 3D object which is viewed by the viewer through an augmented-reality viewing device.

In an example, the 3D object is a computer-generated image which is viewed by the viewer through a virtual reality viewing device.

In an example, the 3D object is a real 3D object and the overlaying the content regions of the Web page on the respective allocated portions of the 3D object comprises projecting an image of the content regions of the Web page on the respective allocated portions of the real 3D object.

According to a second aspect disclosed herein, there is provided apparatus for overlaying a Web page on a real or virtual 3D object for viewing by a viewer, the Web page having plural content regions, the apparatus comprising:
at least one processor;
and at least one memory including computer program instructions;
the at least one memory and the computer program instructions being configured to, with the at least one processor, cause the apparatus to:
   allocate the content regions of the Web page to different respective portions of the 3D object;
   wherein the allocating of the content regions of the Web page is hierarchical, such that a content region of the Web page that has a highest importance is allocated to a portion of the 3D object that is at least one of (i) nearest to the viewer in the field of view of the viewer and (ii) centremost in the field of view of the viewer;
   resize at least one of the content regions of the Web page as necessary to fit the content region within the portion of the 3D object allocated to that content region; and,
   overlay the content regions of the Web page on the respective allocated portions of the 3D object.

In an example, the apparatus comprises a display for viewing the image of the 3D object.

The display may be for example googles or other eye pieces or the like, with the apparatus in that case being for example a head-mounted display or other viewing device.

According to a third aspect disclosed herein, there is provided a computer program comprising instructions such that when the computer program is executed on a computing device, the computing device is arranged to overlay a Web page on a real or virtual 3D object for viewing by a viewer, the Web page having plural content regions, by:
allocating the content regions of the Web page to different respective portions of the 3D object;
wherein the allocating of the content regions of the Web page is hierarchical, such that a content region of the Web page that has a highest importance is allocated to a portion of the 3D object that is at least one of (i) nearest to the viewer in the field of view of the viewer and (ii) centremost in the field of view of the viewer;
resizing at least one of the content regions of the Web page as necessary to fit the content region within the portion of the 3D object allocated to that content region; and,
overlaying the content regions of the Web page on the respective allocated portions of the 3D object.

### Brief Description of the Drawings

To assist understanding of the present disclosure and to show how embodiments may be put into effect, reference is made by way of example to the accompanying drawings in which:
Figure 1 shows schematically an example of a Web page;
Figure 2 shows schematically a viewer viewing 3D objects with Web pages overlaid;
Figures 3A and 3B show grids used in an example of a method of overlaying;
Figures 4A and 4B show schematically the overlaying of grids on 3D objects; and,
Figure 5 shows schematically resizing of a grid.

### Detailed Description

As mentioned, numerous arrangements and techniques for presenting a Web page on a display are known, a Web page being a "document" that is suitable for the World Wide Web and Web browsers. So-called cascading style sheets (CSS) is an example of a style sheet language used for describing the presentation of a document written in a markup language, such as HTML (Hypertext Markup Language". CSS is designed primarily to enable the separation of presentation and content and for example enables the graphic design of the Web pages to be easily adjusted.

US6898307B1 mentioned above discloses overlaying a Web page on an image of a real page of paper which is being viewed through augmented reality (AR) goggles. This is used to give the viewer the illusion of holding a printed version of an electronic document without actually printing the displayed document. Despite a number of references to "three dimensional" objects and coordinates, this is merely to describe that the page of paper is present in the real, three-dimensional world: the paper itself, and therefore the image of the paper in the goggles, is strictly two dimensional. This therefore makes it relatively straightforward to overlay a Web page on the image of the two-dimensional page.

In contrast, in examples described herein, a Web page is overlaid on a three dimensional object for viewing by a viewer. This brings about new possibilities for the viewer to interact with the Web page and/or the 3D object, enabling functionality that is not possible otherwise. However, overlaying a Web page on a 3D object presents a number of technical difficulties which do not arise in the simple case of overlaying a Web page on a 2D object or an image of a 2D object as in the prior art, as will become apparent from the following.

As background to the terminology used, in augmented reality ("AR"), some form of physical viewing device, such as glasses or goggles or other head-mounted display or the like, is used to view real objects in the real world whilst at the same time a computer-generated image is superimposed onto the user's view of the real world. In virtual reality ("VR"), typically the entirety of the view that is seen by the user through the head-mounted display is computer-generated. Examples described herein are applicable to both augmented reality and virtual reality.

One of the main problems solved by examples described herein, particularly for users of VR or AR systems, is that a user who is viewing a Web page using a physical viewing device such as a head-mounted display (HMD) typically sees the Web page just "floating" or "hanging" in the air. Also, often, the Web page is transparent or has transparent parts and so is not easily readable. One solution, as in for example US6898307B1, is overlaying Web pages on an image of a non-transparent object in the environment seen by the user (generally over a HMD). This however creates another problem in that objects in the environment in effect become new displays; current rescaling of Web pages only scales the Web pages for planar, 2D rectangular displays, but there is no obligation that objects in the environment will be of planar, 2D rectangular form. Examples described herein can overlay Web pages on real or virtual 3D objects and are not limited to the objects or the images of the objects being planar, 2D rectangular displays. Accordingly, examples described herein have a significant technical advantage for displaying Web pages to users who are using a HMD in VR and/or AR applications or otherwise interacting with real 3D objects.

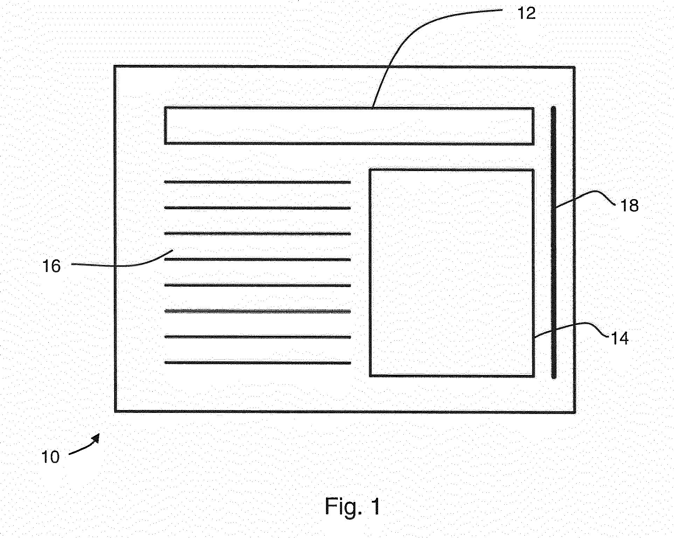

Referring now to Figure 1, there is shown schematically an example of a Web page 10. The Web page 10 has different content regions, with three content regions 12, 14, 16 being shown by way of example. The first content region 12 may be a banner which is commonly used in Web pages as the equivalent of a title or the like for the page. A second content region 14 is or contains an image. The third content region 16 contains text. It will be appreciated that typical Web pages may have only one of these types of content regions or may for example have several text regions 16 and no image regions, or may have several image regions 14 and no text regions 16, or may have several picture regions 14 and several text regions 16. A scroll bar 18 is also shown in the drawing.

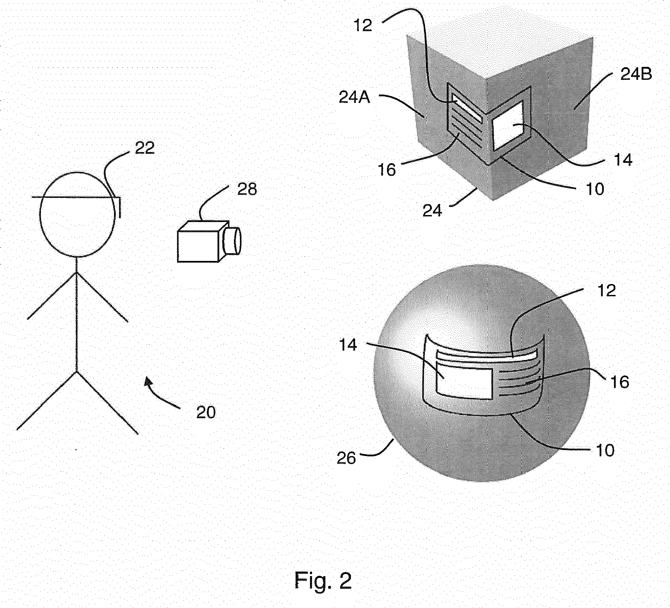

Referring now to Figure 2, there is shown a user or viewer 20 who in this example is wearing a head-mounted display or viewing device 22. The viewing device 22 enables the viewer 20 to view images of objects in three dimensions. A number of different types of viewing devices 22 that enable this are well known. In each of these known viewing devices 22, one way or another, different images are provided to the left and right eyes of the viewer 20 to enable a 3D image to be viewed or perceived by the viewer.

Examples of 3D objects which may be viewed by the viewer 20 are shown on the right hand side of Figure 2. One example is a cube 24 and the other example is a sphere 26. These two examples are particularly straightforward and are given for the purposes of explanation and illustration. It will be understood that 3D objects having more complex shapes may be used. In general, the 3D objects will have much more complex shapes than a simple cube or sphere say.

In this regard, the 3D objects, which may be viewed by the viewer 20 through a viewing device 22 and on which a Web page is overlaid in this example, may be real or equivalently may be images of 3D objects. To explain this, in a virtual reality system, the image of the 3D object is computer-generated and presented for display on the display screen(s) of the viewing device 22. On the other hand, in an augmented reality system, the object is real and is viewed through the display screen(s) of the viewing device 22. Nevertheless, in the sense used herein, in this example in both an augmented reality system and a virtual reality system, a Web page is overlaid on the *image* of a real or virtual 3D object respectively as this is what is viewed and perceived by the viewer 20.

In another example, the Web page is overlaid on a real 3D object for viewing by a viewer 20. That is, in this further example an image of the Web page is overlaid on a real 3D object and can be viewed directly by the viewer 20 without requiring any viewing device 22. In such a case, there may be a projector 28 or the like which projects the image of the Web page onto the real 3D object. The projector 28 may be a separate device or may be built into a viewing device 22 such as a head-mounted display 22.

Returning to Figure 2, the example Web page 10 of Figure 1 is shown overlaid on the cube 24 and the sphere 26. (Again, it is emphasised that, depending on the example and the particular application, the cube 24 or sphere 26 or other 3D object on which the (image of) the Web page 10 is overlaid may be an image of a 3D object, which may be a real or virtual 3D object, or may be a real 3D object.) In this regard, the Web page 10 may be regarded as a form of "responsive Web page". In responsive Web design, the layout of the Web page as displayed is adjusted according to the size of the screen or Web browser that is being used to view the Web page. This enables the layout of the display of the Web page to be adjusted according to whether for example the Web page is being viewed on a large monitor or display screen, a tablet computer or a smart phone, etc. For example, the different regions 12, 14, 16 of the Web page 10 may be (individually) re-sized and/or re-positioned relative to each other according to the size and/or the aspect ratio of the display screen on which it is being viewed. However, the current known responsive Web design techniques cannot be applied in the present case as the current known responsive Web design techniques are only suitable for 2D images and Web pages. For example, in current known responsive Web design techniques, in essence the whole Web page is resized and adjusted to fill the whole of the screen of the device, or at least to fill the whole of the browser window that is being used to display the Web page on the device. This cannot be applied in the case of overlaying a Web page on a 3D object. For example, if the Web page is caused to cover the whole surface of the 3D object, not all of the Web page will be visible to the viewer as parts of the Web page will be hidden from view at the "rear" of the 3D object. Moreover, the scaling that is applied to adjust the size of the different content regions in 2D responsive Web design cannot be applied directly in the case of overlaying a Web page on a 3D object.

As can be seen in the examples of Figure 2, the relative positions of the content regions 12, 14, 16 of the Web page 10 is different in the case of the cube 24 and the sphere 26 and will in general be different for different objects having different 3D shapes. Moreover, the size of at least one of the content regions 12, 14, 16 is different in the two examples and will in general be different for different objects having different 3D shapes.

In the case of the different content regions 12, 14, 16 considered here, the content regions 12, 14, 16 are allocated to different respective portions of the 3D objects, in this case the cube 24 and the sphere 26. In order to determine how to allocate the different content regions 12, 14, 16 to the different portions of the 3D object 24, 26, the content regions 12, 14, 16 are given a hierarchy. The hierarchy may be such that a particular content region or type of content region is regarded as having the highest importance to the viewer 20. The hierarchy and importance may be different for different types of Web pages or according to the general content or nature of the Web page. For example, it may be that for a particular Web page 10, a text region 16 is of most importance to the viewer 22 and image regions 14 may be less important to the viewer 22. Conversely, there may be Web pages 10 for which the image regions 14 are determined to be of the highest importance to the viewer 22 and the text regions 16 may be of less importance to the viewer 22.

This hierarchy or importance may be determined and set at the Web server or the like which is operated by the Website provider. In that case, data concerning the hierarchy or importance of the different content regions 12, 14, 16 may be transmitted with the Web page 10 to the user's browser. Alternatively or additionally, the hierarchy and importance may be set by the user on the user side, for example as a part of the browser software. This may be carried out for example by the user manually selecting an option such that for example text regions 16 or image regions 14 are ranked to be the most important.

Given the hierarchy or importance ranking of the different content regions 12, 14, 16 of the Web page 10, the content region 12, 14, 16 of the Web page 10 that has the highest importance is then allocated to a portion of the 3D object 24, 26 that is at least one of nearest to the viewer 20 in the field of view of the viewer 20 and centremost in the field of view of the viewer 20.

So, referring for example to the cube 24 in Figure 2, the front face 24A is closest to the viewer 20. In this example, it is determined that the banner 12 and text region 16 are of most importance. Accordingly, the banner 12 and text region 16 are overlaid on the front face 24A of the cube 24. The image region 14 is ranked to have a lower importance. In this example, therefore, the image region 14 is overlaid on an adjacent face 24B of the cube 24. That adjacent face 24B is still visible to the viewer 20 in this example, albeit somewhat "to the side" of the image of the cube 24. In the case of the sphere 26, in the example shown the image region 14 is ranked to have the highest importance and therefore the image region 14 is overlaid on the surface of the sphere 26 at a portion that is centremost in the field of view of the viewer (which, in the case of a sphere, is also the portion that is nearest to the viewer 20). The text region 16 is positioned adjacent the image region 14. In addition, in this example, the banner 12 is positioned above and across both the image region 14 and the text region 16.

Once it has been determined where on the 3D object the different content regions 12, 14, 16 should be overlaid, it is then necessary to fit the content regions 12, 14, 16 to the different portions of the 3D object. That is, some re-sizing of one or more of the content regions 12, 14, 16 may be required.

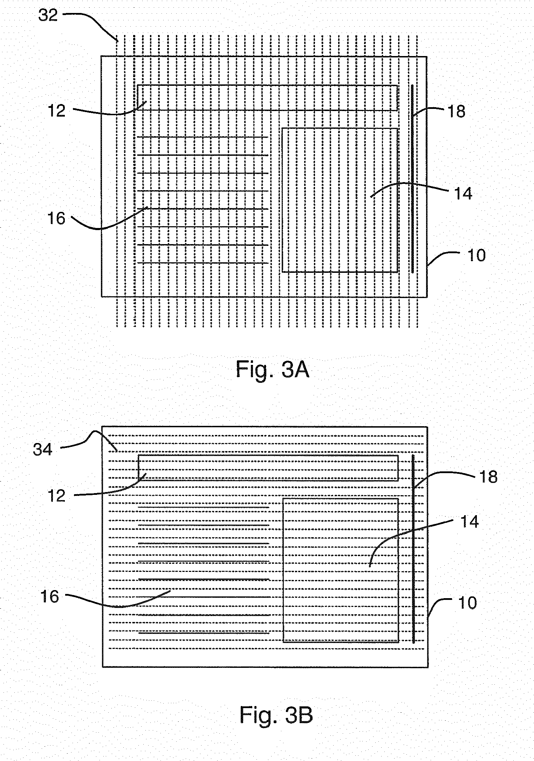

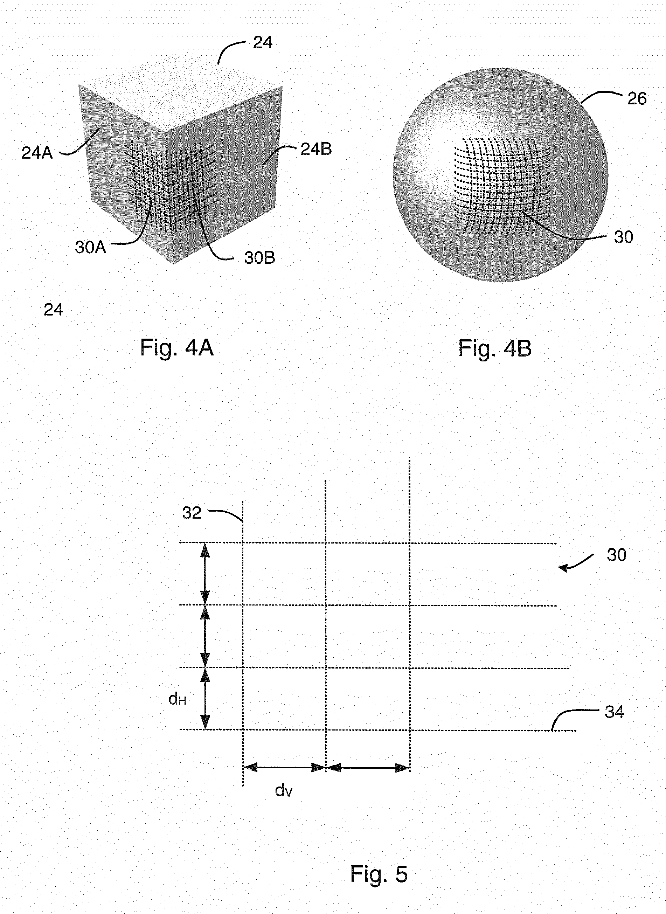

To achieve this, and referring to Figures 3A and 3B, the Web page 10 which is to be overlaid may be (notionally) divided into grids 30. In Figure 3A, vertical grid lines or columns 32 are indicated and in Figure 3B horizontal grid lines or rows 34 are indicated. Figures 4A and 4B show respectively the (notional) overlaying of the grids 30 on the cube 24 and sphere 26 respectively. There may be separate grids 30 for each different content region 12, 14, 16. In addition, in the case of the 3D object having a number of discrete surfaces on which the different content regions 12, 14, 16 are overlaid, different grids may be used for each of the different surfaces. For example, in Figure 4A, one face 24A of the cube 24 has a first (notional) grid 30A and a second face 24B of the cube 24 has a second (notional) grid 30B.

The grid or grids 30 are then resized in order to fit the grid 30 to the corresponding portion of the 3D object. The overall size of the grid that is required may depend on for example the size of the portion of the 3D object over which the corresponding content region 12, 14, 16 is to be overlaid. It may be for example that the content region 12, 14, 16 is intended to completely fill the corresponding portion of the 3D object. Alternatively, the content region 12, 14, 16 may be intended to fill only say a certain percentage of the corresponding portion of the 3D object.

In any event, and referring briefly to Figure 5, the size of the grid 30 is adjusted as necessary by increasing one or both of the separation dv between adjacent vertical lines 32 and the spacing d_{H} between adjacent horizontal grid lines 34. Then, once the required size for the grid 30 has been achieved, the corresponding content region 12, 14, 16 is scaled correspondingly.

In this regard, the scaling may use a technique that is similar to the so-called "fluid grids", which is used in (2D) responsive Web page design. With fluid grids, first the Web page is scaled to the maximum layout size that may be used. This may for example correspond to the highest possible pixel count that may be used on a typical large display device. This may correspond to for example a pixel count of 1200 in the vertical direction of the display screen. Then, if it is found for example that the Web page is to be displayed on a device that only has a pixel count of say 300 pixels in the vertical direction, all content on the Web page is scaled to 25%. That is, in summary, instead of using an absolute number of pixels for the Web page, fluid grids use proportional widths and heights. Minimum scalable ratios may be set so that the content region 12 14, 16 is not resized below a certain specific size.

It should be noted that whilst there are similarities to the known 2D fluid grids, the fluid grids used herein and the techniques used herein are different. This is because the known technique only creates rectangular fluid grids, whereas examples described herein try to fit the Web page over a 3D object. This is more complicated. For example, with 2D fluid grids, it is only necessary to adjust on a rectangular frame, which is much simpler than having to adjust for a 3D object as described herein.

In order to be able to overlay a Web page on a 3D object (whether it is a real or computer-generated object and whether the Web page is being overlaid on a real 3D object or an image of a 3D object), the shape of the 3D object needs to be known. Also, the relative positions of portions of the 3D object relative to each other and the viewer 22 need to be known so that for example a portion of the 3D object that is nearest to the viewer 22 and/or centremost in the field of view of the viewer 22 can be determined.

In the case of the image of the 3D object being computer-generated, as in the case of for example a virtual reality system, the software that generated the 3D object already "knows" the shape of the 3D object that is rendered. That software may be part of software controlling operation of the viewing device 22 or may be running on a separate computer to which the software controlling operation of the viewing device 22 has access. Either way, the software controlling operation of the viewing device 22 can obtain knowledge of the shape of the rendered 3D object in the case of a virtual reality system.

On the other hand, in the case that the 3D object is real and is being viewed through the viewing device 22, as in the case for example augmented reality, or is real and the Web page is projected onto the real 3D object for viewing, it is necessary to detect the shape of the 3D object. This can be achieved in a number of ways. For example, a single camera may be used and computer vision estimation techniques are employed in order to estimate the shape of the 3D object. A more accurate determination of the shape of the 3D object may be obtained using two separate cameras which obtain a stereoscopic view of the real 3D object. As another alternative, a time of flight sensor may be used. In such a case, a signal (for example in infrared) may be transmitted at the 3D object and the time of flight for the reflected signal to be detected by the sensor is used to obtain information about the distance of that portion of the 3D object from the sensor. This is repeated with a number of transmitted signals to build up a 3D map of the surface of the 3D object. In yet another example, so-called structured light may be used. In this, a known pattern, such as a grid, is projected onto the 3D object. The grid is distorted by the 3D shape of the object. That grid can then be viewed by a camera and analysed to again obtain a map of the 3D surface of the 3D object. This can then be accessed or made available to the software controlling operation of the viewing device 22 in the case that the Web page is overlaid on an image of the real 3D object as in an AR system for example, or can be accessed or made available to the software controlling operation of the projector 28 in the case that an image of the Web page is projected to be overlaid on the real 3D object. In any of these examples, the camera or cameras or transmitters and receivers and the like for determining the shape and relative position of the real 3D object, etc. may for example be provided as separate devices and/or may be incorporated into a HMD device.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method for overlaying a Web page on a real or virtual 3D object for viewing by a viewer, the Web page having plural content regions, the method comprising:
allocating the content regions of the Web page to different respective portions of the 3D object;
wherein the allocating of the content regions of the Web page is hierarchical, such that a content region of the Web page that has a highest importance is allocated to a portion of the 3D object that is at least one of (i) nearest to the viewer in the field of view of the viewer and (ii) centremost in the field of view of the viewer;
resizing at least one of the content regions of the Web page as necessary to fit the content region within the portion of the 3D object allocated to that content region; and,
overlaying the content regions of the Web page on the respective allocated portions of the 3D object.

2. A method according to claim 1, wherein the resizing of the at least one of the content regions of the Web page is carried out using a grid having a plurality of rows and a plurality of columns, wherein a grid is notionally applied to the portion of the 3D object allocated to that content region and the spacing of the rows and columns of the grid are adjusted as necessary so that the grid fits that content region.

3. A method according to claim 1 or claim 2, comprising, prior to overlaying a content region on an allocated portion of the 3D object, reshaping the content region as necessary according to the three dimensional shape of the allocated portion of the 3D object.

4. A method according to any of claims 1 to 3, comprising, prior to overlaying a content region on an allocated portion of the 3D object, reshaping the content region as necessary according to the perspective of the allocated portion of the 3D object as viewed by the user.

5. A method according to any of claims 1 to 4, wherein the 3D object is an image of a real 3D object which is viewed by the viewer through an augmented-reality viewing device.

6. A method according to any of claims 1 to 4, wherein the 3D object is a computer-generated image which is viewed by the viewer through a virtual reality viewing device.

7. A method according to any of claims 1 to 4, wherein the 3D object is a real 3D object and the overlaying the content regions of the Web page on the respective allocated portions of the 3D object comprises projecting an image of the content regions of the Web page on the respective allocated portions of the real 3D object.

8. Apparatus for overlaying a Web page on a real or virtual 3D object for viewing by a viewer, the Web page having plural content regions, the apparatus comprising:
at least one processor;
and at least one memory including computer program instructions;
the at least one memory and the computer program instructions being configured to, with the at least one processor, cause the apparatus to:
allocate the content regions of the Web page to different respective portions of the 3D object;
wherein the allocating of the content regions of the Web page is hierarchical, such that a content region of the Web page that has a highest importance is allocated to a portion of the 3D object that is at least one of (i) nearest to the viewer in the field of view of the viewer and (ii) centremost in the field of view of the viewer;
resize at least one of the content regions of the Web page as necessary to fit the content region within the portion of the 3D object allocated to that content region; and,
overlay the content regions of the Web page on the respective allocated portions of the 3D object.

9. Apparatus according to claim 8, comprising computer program instructions such that the resizing of the at least one of the content regions of the Web page is carried out using a grid having a plurality of rows and a plurality of columns, wherein a grid is notionally applied to the portion of the 3D object allocated to that content region and the spacing of the rows and columns of the grid are adjusted as necessary so that the grid fits that content region.

10. Apparatus according to claim 8 or claim 9, comprising computer program instructions such that, prior to overlaying a content region on an allocated portion of the 3D object, the content region is reshaped as necessary according to the three dimensional shape of the allocated portion of the 3D object.

11. Apparatus according to any of claims 8 to 10, comprising computer program instructions such that, prior to overlaying a content region on an allocated portion of the 3D object, the content region is reshaped as necessary according to the perspective of the allocated portion of the 3D object as viewed by the user.

12. A computer program comprising instructions such that when the computer program is executed on a computing device, the computing device is arranged to overlay a Web page on a real or virtual 3D object for viewing by a viewer, the Web page having plural content regions, by:
allocating the content regions of the Web page to different respective portions of the 3D object;
wherein the allocating of the content regions of the Web page is hierarchical, such that a content region of the Web page that has a highest importance is allocated to a portion of the 3D object that is at least one of (i) nearest to the viewer in the field of view of the viewer and (ii) centremost in the field of view of the viewer;
resizing at least one of the content regions of the Web page as necessary to fit the content region within the portion of the 3D object allocated to that content region; and,
overlaying the content regions of the Web page on the respective allocated portions of the 3D object.

13. A computer program according to claim 12, comprising instructions such that the resizing of the at least one of the content regions of the Web page is carried out using a grid having a plurality of rows and a plurality of columns, wherein a grid is notionally applied to the portion of the 3D object allocated to that content region and the spacing of the rows and columns of the grid are adjusted as necessary so that the grid fits that content region.

14. A computer program according to claim 12 or claim 13, comprising instructions such that, prior to overlaying a content region on an allocated portion of the 3D object, the content region is reshaped as necessary according to the three dimensional shape of the allocated portion of the 3D object.

15. A computer program according to any of claims 12 to 14, comprising instructions such that, prior to overlaying a content region on an allocated portion of the 3D object, the content region is reshaped as necessary according to the perspective of the allocated portion of the 3D object as viewed by the user.
